# EUROPÄISCHE PATENTSCHRIFT

(11) **EP 1 181 180 B1**
(45) Veröffentlichungstag und Bekanntmachung des Hinweises auf die Patenterteilung: **25.07.2007**
(21) Anmeldenummer: 01936117.9
(22) Anmeldetag: 21.03.2001
(51) Int. Cl.: B60T 13/573, F16D 65/20, F15B 15/14, F16F 9/04

(54) **SCHWINGUNGSDÄMPFER FÜR EINE HYDRAULISCHE FAHRZEUG-BREMSANLAGE**
VIBRATION DAMPER FOR A HYDRAULIC VEHICLE BRAKE UNIT
AMORTISSEUR DE VIBRATIONS POUR SYSTEME DE FREIN HYDRAULIQUE D'UN VEHICULE

(30) Priorität: 05.04.2000 DE 10016880
(43) Veröffentlichungstag der Anmeldung: 27.02.2002
(73) Patentinhaber: Bayerische Motoren Werke Aktiengesellschaft, 80809 München (DE)
(72) Erfinder: NAGY, Imre, 85386 Eching (DE); MAIER, Ernst, 85570 Markt Schwaben (DE); MITTERER, Johann, 80809 München (DE)
(86) Internationale Anmeldenummer: PCT/EP2001/003219
(87) Internationale Veröffentlichungsnummer: WO 2001/076926

(56) Entgegenhaltungen:
- EP-A- 0 851 109
- US-A- 5 269 894
- US-A- 5 460 438
- US-A- 5 664 848

## Beschreibung

Die Erfindung betrifft einen Schwingungsdämpfer für eine hydraulische Fahrzeug-Bremsanlage mit einer dem die Bremskraft übertragenden Hydraulikmedium zugewandten Membrane, die mit ihrem Randbereich letztlich an einem als Bremskolben im Bremssattel einer Fahrzeugbremse fungierenden Trägerkörper befestigt ist und die sich mit ihrem Zentralbereich zumindest geringfügig zum Trägerkörper hin oder von diesem weg bewegen kann. Zum bekannten Stand der Technik wird neben der DE 195 44 223 A1 und der US 5,460,438 auf die nicht vorveröffentlichte EP 1169580 B1 verwiesen.

Es kann erforderlich sein, in einer hydraulischen Bremsanlage einen Schwingungsdämpfer vorzusehen, um hiermit unerwünschte Schwingungen im Hydrauliksystem zu vermindern, bzw. zu verhindern, daß sich kleine, durch irgendwelche Störkräfte angefachte Schwingungen zu einer nicht mehr tolerierbaren Intensität aufschaukeln. Dabei kann ein derartiger Schwingungsdämpfer auch als "Druckglätter" bezeichnet werden. Hierfür können bspw. federbelastete Schwingungsdämpfer zum Einsatz kommen, die jedoch relativ aufwendig sind. Wesentlich einfacher ist ein aus der o.g. DE 195 44 223 A1 bekannter Schwingungsdämpfer, der ein Gehäuse oder einen Trägerkörper mit einer konkav ausgebildeten Ausnehmung aufweist, welche durch eine scheibenförmige Membrane aus Federblech abgeschlossen ist. Diese außenseitig vom Hydraulikmedium der Bremsanlage beaufschlagte Membrane ist randseitig mit dem Trägerkörper verschweißt und der zwischen der Membrane und der genannten Ausnehmung gelegene Hohlraum ist mit Luft gefüllt. Entstehende Druckschwingungen im Hydrauliksystem veranlassen die Membrane, sich mit ihrem Zentrumsbereich in den Hohlraum hinein und wieder vom Trägerkörper wegzubewegen, wodurch bei geeigneter Auslegung eine Schwingungsdämpfung erzielt werden kann. Eine andere Ausführungsform ist aus der US 5,460,438 bekannt, wobei zwei Membranen einen evakuierten Hohlraum einschließen, so dass dann, wenn eine der zwangsläufig relativ dünn und somit schwach ausgebildeten Membranen reißt, keine Luft aus dem Hohlraum in das Hydrauliksystem gelangen kann. Weiteren jedoch nicht vorveröffentlichten Stand der Technik bildet das europäische Patent EP 1169580 B1. Während beim bislang erläuterten Stand der Technik der sog. Schwingungsdämpfer an einem nicht definierten Element eines Fahrzeug-Bremssystems (vgl. DE 195 44 223 A1) oder in einer hydraulischen Steuereinheit für eine mehrkreisige Fahrzeug-Bremsanlage (vgl. US 5,460,438) vorgesehen ist, ist in der EP 1169580 B1 ein ähnlicher Schwingungsdämpfer am sog. Bremskolben eines Bremssattels; der bei einem Bremsvorgang einen Bremsbelag gegen eine Bremsscheibe oder dgl. drückt, platziert.

Mit der vorliegenden Erfindung soll nun aufgezeigt werden, wie ein Schwingungsdämpfer nach dem Oberbegriff des Anspruchs 1, der durch die EP 1168590 B1 gebildet ist, einfacher gefertigt bzw. hergestellt werden kann (= Aufgabe der vorliegenden Erfindung).
Die Lösung dieser Aufgabe ist dadurch gekennzeichnet, daß die Membrane zusammen mit einer weiteren Membrane eine Membraneinheit bildet, wobei die beiden im wesentlichen übereinander angeordneten Membranen in ihrem ringförmigen Randabschnitt aneinander befestigt sind und dabei dicht aufeinander aufliegen und im Zentralbereich innerhalb dieses Randabschnittes zwischen sich einen Hohlraum einschließenden. Vorteilhafte Aus- und Weiterbildungen sind Inhalt der Unteransprüche.

Während im nächstkommenden Stand der Technik, nämlich nach der nicht vorveröffentlichte EP 1169580 B1 die Schwingungsdämpfung mittels einer einzigen Membrane erfolgt, die relativ zu einem sog. Trägerkörper, bei welchem es sich um den Bremskolben im Bremssattel der Fahrzeugbremse handelt, bewegt wird, und wobei das Volumen eines zwischen diesem Trägerkörper sowie der Membrane eingeschlossenenen Hohlraumes bei Veränderung des im Hydraulikmedium herrschenden Druckes verändert wird, ist nun eine sog. Membraneinheit vorgesehen, die aus zwei Membranen besteht und zwischen denen sich der besagte Hohlraum, dessen Volumen durch Druckschwin-gungen im außenseitig an zumindest einer der Membranen anliegenden Hydraulikmedium verändert wird, befindet.

Während beim nächstkommenden Stand der Technik, nämlich nach der nicht vorveröffentlichte EP 1169580 B1 die Membrane außenseitig dicht mit dem Trägerkörper verbunden werden muß, um den für eine erfolgreiche Schwingungsdämpfung oder Druckglättung hermetisch abgedichteten Hohlraum zu schaffen, kann bei der vorliegenden Erfindung die Befestigung der Membraneinheit am Trägerkörper wesentlich einfacher gestaltet sein. Beispielsweise wird beim bekannten Stand der Technik die Membrane in ihrem Randbereich mit dem Trägerkörper verschweißt, was wegen der geforderten Dichtheit relativ aufwendig ist, während nach der vorliegenden Erfindung die Membraneinheit einfach in einer geeigneten Nut oder dgl. im Trägerkörper gehalten sein kann. Selbstverständlich ist es dabei erforderlich, die beiden Membranen der Membraneinheit in deren ringförmigem Randabschnitt dicht und fest miteinander zu verbinden, bspw. ebenfalls durch Verschweißen, jedoch kann diese Verbindung zwischen zwei übereinander liegenden Membranen deutlich einfacher gefertigt werden als eine solche zwischen einer dünnen Membrane und einem demgegenüber deutlich massiveren Trägerkörper / Bremskolben.

Es wurde bereits erwähnt, daß die Membraneinheit auf einfache Weise in einer im Trägerkörper bzw. Bremskolben insbesondere im Rand einer Ausnehmung vorgesehenen Nut oder dgl. befestigt sein kann, nämlich durch Eindrücken oder Einstecken, aber bspw. auch nach Art eines Bajonettverschlusses. Bevorzugt kann diese Verbindung zwischen Membraneinheit und Trägerkörper bzw. Bremskolben dabei derart ausgebildet sein, daß die dem Trägerkörper bzw. dessen Oberfläche zugewandte Membrane abseits des sog Befestigungsabschnittes der Membraneinheit am Trägerkörper von der Oberfläche des Trägerkörpers beabstandet ist und daß der Raum zwischen der Oberfläche des Trägerkörpers und der dieser zugewandten und dabei von dieser beabstandeten Membrane mit dem Hydraulikmedium in Fluid-Verbindung steht. Dann wird nämlich die Membraneinheit von beiden Seiten, d.h. auf den Außenseiten der beiden diese Einheit bildenden Membranen mit den Druckschwingungen im Hydraulikmedium beaufschlagt, so daß die gesamte die gewünschte Schwingungsdämpfung bewirkende Oberfläche der Membrane bzw. der Membraneinheit bei unveränderter Abmessung des Trägerkörpers /Bremskolbens erheblich vergrößert, nahezu verdoppelt wird. Bei Druckschwingungen im Hydrauliksystem verformen sich somit die beiden Membranen der Membraneinheit.

Um eine bestimmte Dämpfungswirkung zu erzielen, kann mit der soeben beschriebenen Maßnahme gegenüber einer lediglich einseitig beaufschlagten Membran nach dem bekannten Stand der Technik die Materialstärke der Membran nahezu verdoppelt werden, was der Dauerfestigkeit dieses Schwingungsdämpfungssystemes äußerst förderlich ist. Dennoch kann es empfehlenswert sein, auch bei einer erfindungsgemäßen Membraneinheit den Hohlraum zwischen den beiden Membranen weitestgehend zu evakuieren, um im Falle eines Membranrisses oder -Bruches ein Eintreten von Luft in das Hydraulikmedium zu vermeiden.

Die hinsichtlich des gewünschten Effektes, nämlich der Schwingungsdämpfung, wirksame Oberfläche kann bspw. bei vorgegebenen Abmessungen des Trägerkörpers noch weiter vergrößert und somit die Dämpfungswirkung nochmals gesteigert werden, wenn die Membranen zumindest bereichsweise gewellt bzw. wellenförmig ausgebildet sind. Dabei kann an den beiden Membranen diese Wellenform synchron oder asynchron zueinander vorgesehen sein. Insbesondere aus Festigkeitsgründen kann es ferner empfehlenswert sein, die geometrischen Abmessungen derart zu wählen, daß im im wesentlichen unbelasteten Zustand der Membraneinheit, d.h. wenn kein Bremsdruck in das Hydraulikmedium eingeleitet wird, der den Hohlraum bildende Abstand zwischen den beiden Membranen im Zentrum des Zentralbereiches größer ist als nahe des bereits erwähnten sog. Randringes, an welchem die beiden Membranen aufeinanderliegend aneinander befestigt sind.

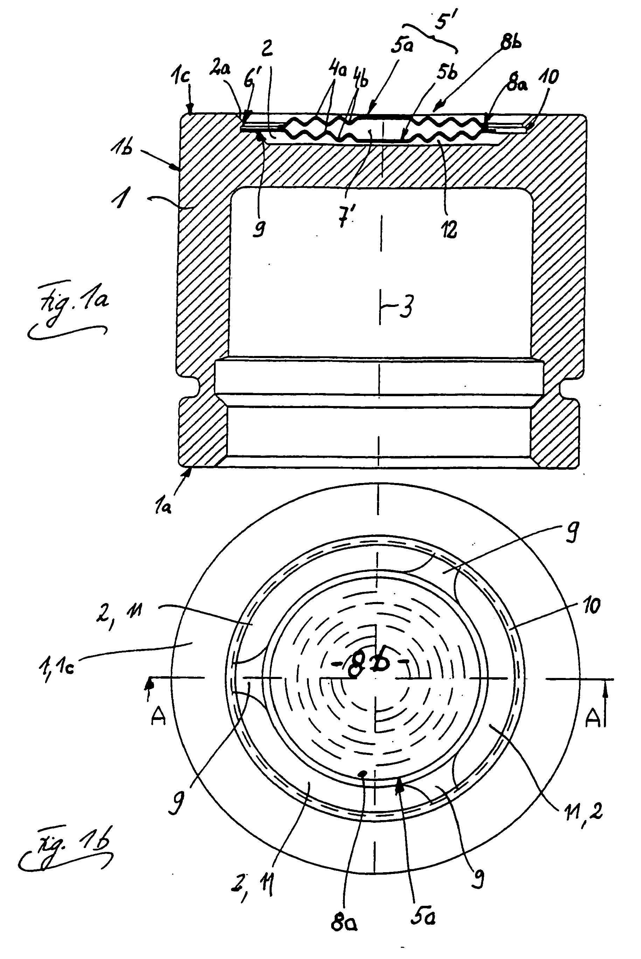

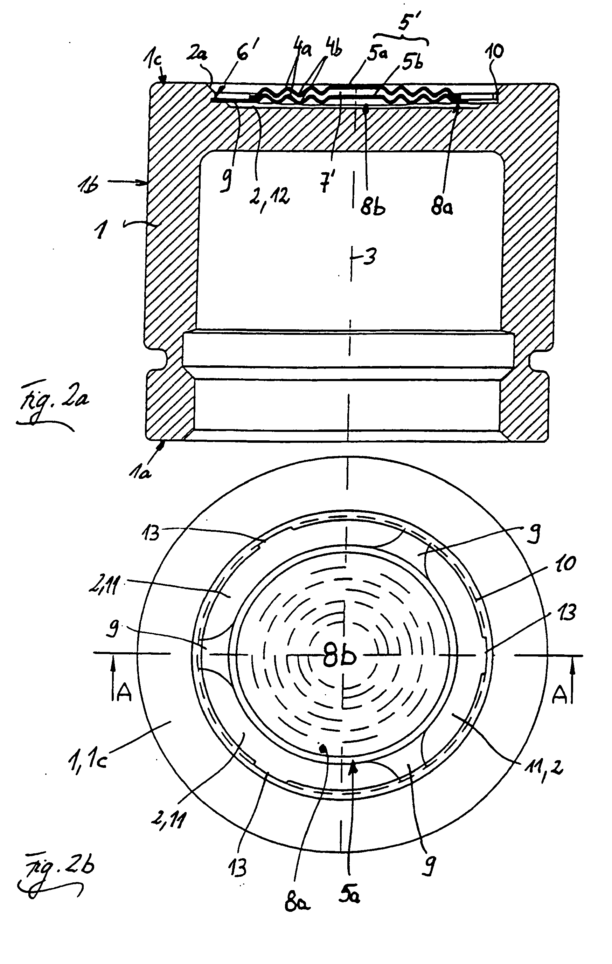

Im folgenden wird die Erfindung anhand zweier bevorzugter Ausführungsbeispiele weiter erläutert, wobei die beigefügte **Figur 1a** den Querschnitt (Schnitt A-A aus Fig.1b) eines ersten erfindungsgemäßen Schwingungsdämpfers zeigt, von dem in **Figur 1b** die Aufsicht dargestellt ist. In den **Figuren 2a, 2b** ist in entsprechender Weise ein zweites Ausführungsbeispiel dargestellt.

Mit der Bezugsziffer 1 ist der sog. Trägerkörper des Schwingungsdämpfers bezeichnet, der gleichzeitig der im Bremssattel einer ansonsten üblichen Kraftfahrzeug-Bremsanlage vorgesehene Bremskolben ist. An der (in den Figuren 1a, 2a unteren) Stirnseite 1a dieses zylindrischen Bremskolbens 1 bzw. Trägerkörpers 1, der mit seiner Zylinder-Mantelfläche 1b in einem nicht dargestellten Zylinder verschiebbar geführt ist, liegt wie üblich ein Bremsbelag-Träger an. Die der Stirnseite 1a gegenüberliegende Stirnseite 1c wird wie üblich vom die Bremskraft übertragenden Hydraulikmedium beaufschlagt.

In der Stirnseite 1c ist eine kreisförmige Vertiefung 2 im Trägerkörper 1 vorgesehen, die quasi wannenförmig ausgebildet ist, d.h. der Rand 2a der Vertiefung 2 oder auch Ausnehmung 2 ist zur Zentralachse 3 des Trägerkörpers hin geneigt. In diese Vertiefung 2 oder Ausnehmung 2 eingesetzt ist eine sog. Membraneinheit 5', die aus zwei in Richtung der Zentralachse 3 übereinander angeordneten, im wesentlichen kreisförmigen Membranen 5a, 5b besteht. Diese beiden Membranen 5a, 5b liegen in ihrem ringförmigen Randabschnitt 8a dicht aufeinander auf und sind in diesem ringförmigen Randabschnitt 8a aneinander befestigt, während sie im Zentralbereich 8b innerhalb dieses Randabschnittes 8a voneinander beabstandet sind und zwischen sich einen Hohlraum 7' einschließen. Die besagte Befestigung der beiden Membranen 5a, 5b aneinander bzw. deren dichte Verbindung miteinander ist dabei mittels einer umlaufenden Schweißnaht 6 realisiert.

Vom Randabschnitt 8a der hier unteren Membran 5b ragen über deren Umfang gleichmäßig verteilt drei Stege 9 nach außen, d.h. vom Zentralbereich 8b weggerichtet, ab. Mit diesen Stegen 9 ist die Membraneinheit 5' am Trägerkörper 1 befestigt, und zwar derart, daß diese Stege 9 in eine im Rand 2a der Ausnehmung 2 vorgesehene umlaufende Nut 10 eingreifen. Beim Ausführungsbeispiel nach **Fig.1a, 1b** ist die Membraneinheit 5' durch einfache elastische Umformung insbesondere der Stege 9 mit diesen Stegen 9 in die Nut 10 eingesetzt, d.h. die Abmessung der Nut 10 und die Gestaltung des Randes 2a ist derart gewählt, daß die Membraneinheit 5' einfach von oben her (d.h. längs der Zentralachse 3 zum Trägerkörper 1 hin) ähnlich einer Clipsverbindung eingedrückt werden kann. Beim Ausführungsbeispiel nach **Fig.2a, 2b** ist die Membraneinheit 5' nach Art eines Bajonettverschlusses am Trägerkörper 1 befestigt bzw. solchermaßen mit den Stegen 9 in die Nut 10 eingesetzt.

Wie **Fig.2b** zeigt sind mit diesen Stegen 9 korrespondierende Aussparungen 13 im Rand 2a der Vertiefung 2 vorgesehen, über welche die Stege 9 (zusammen mit der Membraneinheit 5') zunächst von oben her in die Nut 10 eingesetzt werden können. Danach wird die Membraneinheit 5' um die Zentralachse 3 um einen gewissen Winkelbetrag verdreht, wonach die Stege 9 in der figürlich dargestellten Position zum Liegen kommen, aus welcher sie nicht aus der Nut 10 herausgleiten können. Eine nicht dargestellte Verdrehsicherung verhindert dabei, daß die Stege 9 mit der Membraneinheit 5' zurück in die sog. Einsetzposition verdreht werden können.

Bei beiden Ausführungsbeispielen ist die der Oberfläche des Trägerkörpers 1 zugewandte (untere) Membrane 5b abseits des sog. Befestigungsabschnittes 6', der durch die Stege 9 im Zusammenwirken mit der Nut 10 gebildet wird, von der Oberfläche des Trägerkörpers 1 (im Bereich der Ausnehmung 2) beabstandet. Gleichzeitig steht der dadurch gebildete Raum 12 zwischen der Oberfläche des Trägerkörpers 1 und der dieser zugewandten und dabei von dieser beabstandeten Membrane 5b mit dem Hydraulikmedium in Fluid-Verbindung, und zwar über die Zwischenräume 11 zwischen den Stegen 9. Wie bereits erwähnt, liegt nämlich an der (oberen) Stirnseite 1c des Trägerkörpers 1 / Bremskolbens 1 und somit auch an der dem Hohlraum 7' abgewandten Außenseite der (oberen) Membrane 5a das den Bremsdruck übertragende Hydraulikmedium an.

Wirken auf die freie, von außen zugängliche, d.h. dem Hydraulikmedium des Hydrauliksystemes der Bremsanlage zugewandte Oberfläche der Membrane 5a keine bzw. im wesentlichen keine Kräfte ein, so ist die Membrane 5a von der Membrane 5b beabstandet, da auf letztere - über die Zwischenräume 11 quasi vom Trägerkörper 1 her kommend - ebenfalls keine Kräfte einwirken. Zwischen den beiden Membranen 5a und 5b der Membraneinheit 5' befindet sich somit der bereits besagte Hohlraum 7', der bevorzugt weitestgehend evakuiert ist, d.h. in diesem Hohlraum 7' herrscht im wesentlichen Vakuum. Wird das Hydrauliksystem bzw. Hydraulikmedium jedoch unter Druck gesetzt, - nämlich durch Einleitung von Bremsdruck - , so werden hierdurch die beiden Membranen 5a, 5b unter gleichzeitiger Verkleinerung des Hohlraumes 7' aufeinander zubewegt. Mit weiterer Drucksteigerung im Hydrauliksystem werden die beiden Membranen 5a, 5b der Membraneinheit 5' soweit verformt, bis sie schließlich (mehr oder weniger vollflächig) aufeinander aufliegen. Dabei wird unabhängig von dieser beschriebenen Verformung der Membranen 5a, 5b weiterhin die Bremskraft vom Hydraulikmedium auf die gesamte Oberfläche bzw. Stirnseite 1c des Trägerkörpers 1 bzw. Bremskolbens 1 übertragen, d.h. unabhängig von der beschriebenen Verformung der Membranen 5a, 5b wird der Bremskolben 1 im Bremssattel längs der Zentralachse 3 mit seiner Stirnseite 1c in Richtung seiner Stirnseite 1a verschoben.

Die Verformung der Membranen 5a, 5b der Membraneinheit 5' bewirkt jedoch, daß Schwingungen im auf die Stirnseite 1c des Trägerkörpers 1 und somit auch auf die Membraneinheit 5' einwirkenden Hydrauliksystem der Fahrzeug-Bremsanlage mit dem durch diese Membraneinheit 5' mit dem dazwischen liegenden vorzugsweise evakuierten Hohlraum 7' gebildeten Schwingungsdämpfer solange erfolgreich gedämpft werden, bis die beiden Membranen 5a, 5b unter Einwirkung des Hydraulikdruckes im wesentlichen vollständig bzw. vollflächig aufeinander zum Aufliegen kommen. Ist der Hydraulikdruck jedoch geringer als dieser Wert, so werden Druckschwingungen im Hydrauliksystem die Membranen 5a, 5b zumindest in ihrem Zentralbereich 8b in Schwingung zu versetzen trachten, d.h. zeitlich betrachtet die Membranen 5a, 5b abwechselnd aufeinander zu und voneinander weg bewegen. Bei geeigneter Abstimmung der relevanten Dimensionen kann hieraus eine wirkungsvolle Schwingungsdämpfung resultieren.

Bspw. kann die Dicke der bspw. aus Nickelstahl oder NiBe bestehenden Membranen 5a, 5b in der Größenordnung von 0,3 mm bis 1,0 mm liegen. Vorteilhafterweise spricht ein derartiger Schwingungsdämpfer nur in dem tatsächlich benötigten Wertebereich des im Hydrauliksystem herrschenden (variablen) Druckes an, so bspw. im Bereich von ca. 2 bar bis ca. 20 bar. Bei höheren Hydraulikdrücken können - wie bereits erwähnt - die beiden Membranen 5a, 5b im wesentlichen vollflächig aufeinander aufliegen, so daß keine Beeinflussung des Bremsverhaltens des Gesamtsystemes zu befürchten ist. Besonders erwähnt werden soll an dieser Stelle nochmals, daß der durch diese Membraneinheit 5' gebildete Schwingungsdämpfer die Übertragung der Bremskraft vom Hydraulikmedium auf den Trägerkörper 1 / Bremskolben 1 in keiner Weise verfälscht, da das Hydraulikmedium über die Zwischenräume 11 zwischen den Stegen 9 auf die gesamte Oberfläche der Stirnseite 1 c des Bremskolbens 1 einwirken kann.

Zur weiteren Vergrößerung der wirksamen Oberfläche des erfindungsgemäßen Schwingungsdämpfers sind die Membranen 5a, 5b im Querschnitt betrachtet bereichsweise wellenförmig ausgebildet. Da es sich - wie bereits erwähnt - nicht nur um eine kreisförmige Vertiefung 2 im zylindrischen Trägerkörper 1 sondern auch um in Aufsicht im wesentlichen kreisförmige Membranen 5a, 5b handelt, beschreiben die Wellenspitzen 4a bzw. die Wellentäler 4b dieser wellenförmigen Membranflächen selbstverständlich ebenfalls Kreise. Beim Ausführungsbeispiel nach **Fig.2a,b** sind die Membranen 5a, 5b dabei derart ausgebildet bzw. relativ zueinander derart synchron angeordnet, daß deren Wellenspitzen 4a einander gleichgerichet sind, d.h. mit Verkleinerung des Hohlraumes 7' ineinander eingreifen. Beim Ausführungsbeispiel nach **Fig.1a,b** hingegen liegen die einander entgegengerichteten Wellenspitzen 4a quasi asynchron, d.h. bei Verkleinerung des Hohlraumes 7' treffen die Wellenspitzen 4a aufeinander auf.

Während beim Ausführungsbeispiel nach **Fig.2a,b** bei entsprechend hohem Hydraulikdruck die beiden Membranen 5a, 5b praktisch vollflächig aufeinander aufliegen können, ist dies beim Ausführunsbeispiel nach **Fig.1a,b** nicht der Fall. Bei der letztgenannten Ausführungsform kann somit auch bei sehr hohen Druckwerten im Hydraulikmedium zumindest noch eine geringe Schwingungsdämpfung erzielt werden, was bei der erstgenannten Ausführungsform bei im wesentlichen vollflächig aufeinander liegenden Membranen 5a, 5b nicht der Fall ist. Unabhängig von der jeweiligen Ausführungsform sei in diesem Zusammenhang nochmals darauf hingewiesen, daß unabhängig von der Höhe des im Hydraulikmedium herrschenden Druckes die Membraneinheit 5' als Ganzes hinsichtlich ihrer Befestigung im Bremskolben 1 /Trägerkörper 1 nicht nennenswert belastet wird, da dieser Hydraulikdruck auf beide Membranen 5a, 5b von außen und dabei in entgegengesetzter Richtung einwirkt. An den sog. Befestigungsabschnitt 6' der Membraneinheit 5', d.h. im wesentlichen an die Stege 9 wird somit keine besonders hohe mechanische Anforderung gestellt.

Was die Abmessung des evakuierten Hohlraumes 7' betrifft, die auch durch die wellenförmige Gestaltung der Membranen 5a, 5b definiert wird bzw. gewünscht beeinflußbar ist, so ist der (in den Figurendarstellungen in Vertikalrichtung gemessene) Abstand zwischen den nicht mit Hydraulikdruck beaufschlagten Membranen 5a, 5b (d.h. im im wesentlichen unbelasteten Zustand derselben) im Zentrum des Zentralbereiches 8b (d.h. in direkter Umgebung der Zentralachse 3) größer als nahe des ringförmigen Randabschnittes 8a, wobei abschließend noch darauf hingewiesen sei, daß durchaus eine Vielzahl von Details abweichend vom gezeigten Ausführungsbeispiel gestaltet sein kann, ohne den Inhalt der Patentansprüche zu verlassen. Bspw. kann der Hohlraum 7' zwischen den Membranen 5a, 5b auch mit einem geeigneten kompressiblen Medium befüllt sein.

## Patentansprüche

1. Schwingungsdämpfer für eine hydraulische Fahrzeug-Bremsanlage mit einer dem die Bremskraft übertragenden Hydraulikmedium zugewandten Membrane (5a), die mit ihrem Randbereich letztlich an einem als Bremskolben (1) im Bremssattel einer Fahrzeugbremse fungierenden Trägerkörper (1) befestigt ist und die sich mit ihrem Zentralbereich (8b) zumindest geringfügig zum Trägerkörper (1) hin oder von diesem weg bewegen kann,
**dadurch gekennzeichnet, daß** die Membrane (5a) zusammen mit einer weiteren Membrane (5b) eine Membraneinheit (5) bildet, wobei die beiden im wesentlichen übereinander angeordneten Membranen (5a, 5b) in ihrem ringförmigen Randabschnitt (8a) aneinander befestigt sind und dabei dicht aufeinander aufliegen, und im Zentralbereich (8b) innerhalb dieses Randabschnittes (8a) zwischen sich einen Hohlraum (7') einschließen.

2. Schwingungsdämpfer nach Anspruch 1,
**dadurch gekennzeichnet, daß** die dem Trägerkörper (1) zugewandte Membrane (5b) abseits des Befestigungsabschnittes (6') der Membraneinheit (5') von der Oberfläche des Trägerkörpers (1) beabstandet ist.

3. Schwingungsdämpfer nach Anspruch 2,
**dadurch gekennzeichnet, daß** der Raum (12) zwischen der Oberfläche des Trägerkörpers (1) und der dieser zugewandten und dabei von dieser beabstandeten Membrane (5b) mit dem Hydraulikmedium in Fluid-Verbindung steht.

4. Schwingungsdämpfer nach einem der vorangegangenen Ansprüche,
**dadurch gekennzeichnet, daß** der Hohlraum (7') zwischen den beiden Membranen (5a, 5b) weitestgehend evakuiert ist.

5. Schwingungsdämpfer nach einem der vorangegangenen Ansprüche,
**dadurch gekennzeichnet, daß** die Membraneinheit (5') in einer im Trägerkörper (1) im Rand einer Ausnehmung (2) vorgesehenen Nut (10) oder dgl. befestigt ist.

6. Schwingungsdämpfer nach einem der vorangegangenen Ansprüche,
**dadurch gekennzeichnet, daß** die Membraneinheit (5') nach Art eines Bajonettverschlusses am Trägerkörper (1) befestigt ist.

7. Schwingungsdämpfer nach einem der vorangegangenen Ansprüche,
**dadurch gekennzeichnet, daß** im im wesentlichen unbelasteten Zustand der den Hohlraum (7') bildende Abstand zwischen den beiden Membranen (5a, 5b) im Zentrum des Zentralbereiches (8b) größer ist als nahe des ringförmigen Randbereiches (8a).

8. Schwingungsdämpfer nach einem der vorangegangenen Ansprüche,
**dadurch gekennzeichnet, daß** die Membranen (5a, 5b) bereichsweise im Querschnitt wellenförmig ausgebildet sind.

## Claims

1. A vibration damper for a hydraulic vehicle brake system with a membrane (5a) facing the hydraulic medium transmitting the braking force, the membrane being finally fastened by its edge region to a carrier element (1) functioning as a brake piston (1) in the brake calliper of a vehicle brake and the membrane, with its central region (8b), being movable at least slightly toward the carrier element (1) or away from it, **characterised in that** the membrane (5a) together with a further membrane (5b) forms a membrane unit (5), wherein the two membranes (5a, 5b) arranged substantially one above the other are fastened to one another at their annular edge section (8a), lie tightly on one another, and enclose a hollow space (7') between one another in the central region (8b) within this edge section (8a).

2. A vibration damper according to claim 1, **characterised in that** the membrane (5b) facing the carrier element (1) and remote from the fastening section (6') of the membrane unit (5') is spaced apart from the surface of the carrier element (1).

3. A vibration damper according to claim 2, **characterised in that** the space (12) between the surface of the carrier element (1) and the membrane (5b) facing the latter and spaced apart from it is in fluid connection with the hydraulic medium.

4. A vibration damper according to any one of the preceding claims, **characterised in that** the hollow space (7') between the two membranes (5a, 5b) is substantially evacuated.

5. A vibration damper according to any one of the preceding claims, **characterised in that** the membrane unit (5') is fastened in a groove (10) or the like provided in the carrier element (1) in the edge of a recess (2).

6. A vibration damper according to any one of the preceding claims, **characterised in that** the membrane unit (5') is fastened in the manner of a bayonet lock on the carrier element (1).

7. A vibration damper according to any one of the preceding claims, **characterised in that** in the substantially unloaded state, the spacing forming the hollow space (7') between the two membranes (5a, 5b) in the centre of the central region (8b) is greater close to the annular edge region (8a).

8. A vibration damper according to any one of the preceding claims, **characterised in that** the membranes (5a, 5b) are undulating in cross-section in regions.

## Revendications

1. Amortisseur de vibrations pour un système de frein hydraulique d'un véhicule comportant une membrane (5a) orientée vers le fluide hydraulique transmettant la force de freinage, et fixée par sa zone marginale à un corps de support (1) servant de piston de frein (1) dans l'étrier d'un frein de véhicule, sa zone centrale (8b), pouvant effectuer des mouvements de va-et-vient au moins minimes par rapport au corps de support (1),
**caractérisé en ce que**
la membrane (5a) forme avec une autre membrane (5b) une unité de membranes (5) dont les deux membranes (5a, 5b) sensiblement l'une au-dessus de l'autre sont fixées l'une à l'autre par leur segment de bord circulaire (8a), et ainsi étanches l'une sur l'autre en renfermant un espace creux (7') entre elles dans la zone centrale (8b) à l'intérieur de ce segment de bord (8a).

2. Amortisseur de vibrations selon la revendication 1,
**caractérisé en ce que**
la membrane (5b) tournée vers le corps de support (1) est, à une certaine distance du segment de fixation (6') de l'unité de membranes (5'), écartée de la surface du corps de support (1).

3. Amortisseur de vibrations selon la revendication 2,
**caractérisé en ce que**
l'espace (12) entre la surface du corps de support (1) et la membrane (5b) tournée vers celle-ci, dont elle est écartée, est en liaison fluide avec le fluide hydraulique.

4. Amortisseur de vibrations selon l'une des revendications précédentes,
**caractérisé en ce que**
l'espace creux (7') entre les deux membranes (5a, 5b) est très largement évacué.

5. Amortisseur de vibrations selon l'une des revendications précédentes,
**caractérisé en ce que**
l'unité de membranes (5') est fixée dans une rainure (10) ou similaire, prévue dans le corps de support (1) dans le bord d'un évidement (2).

6. Amortisseur de vibrations selon l'une des revendications précédentes,
**caractérisé en ce que**
l'unité de membranes (5') est fixée au corps de support (1) à la manière d'un emboîtement à baïonnette.

7. Amortisseur de vibrations selon l'une des revendications précédentes,
**caractérisé en ce que**
à l'état pour l'essentiel non sollicité, l'écart formant l'espace creux (7') entre les deux membranes (5a, 5b) est plus grand au centre de la zone centrale (8b) que près du segment de bord (8a) circulaire.

8. Amortisseur de vibrations selon l'une des revendications précédentes,
**caractérisé en ce que**
les membranes (5a, 5b) sont ondulées par endroits en coupe transversale.
